# EUROPEAN PATENT APPLICATION

(11) **EP 4 782 869 A1**
(43) Date of publication of application: **29.07.2026**
(21) Application number: 25154440.9
(22) Date of filing: 28.01.2025
(51) Int. Cl.: G01S 5/02, H01Q 1/22, H01Q 21/06

(54) **AERIAL VEHICLE, METHOD, AND COMPUTER PROGRAM PRODUCT FOR SUPPORTING DIRECTION FINDING AND COLLISION AVOIDANCE**

(71) Applicant: Fraunhofer-Gesellschaft zur Förderung der angewandten Forschung e.V., 80686 München (DE)
(72) Inventor: Fischer, Georg, 79104 Freiburg (DE); Höflinger, Fabian, 79104 Freiburg (DE); Schaechtle, Thomas, 79104 Freiburg (DE)
(74) Representative: Pfenning, Meinig & Partner mbB

(57) **Abstract**

A first aerial vehicle is disclosed. The first aerial vehicle comprises an antenna unit with a first and a second antenna submodule. The first submodule includes at least three antennas in a planar configuration, each capable of sending and/or receiving Ultra-Wideband (UWB) signals. The second submodule includes at least three antennas in another planar configuration that is not parallel to the first planar configuration. The first aerial vehicle is configured to send a first UWB signal to a second aerial vehicle and establish a connection link upon receiving a second UWB signal from the second aerial vehicle. It performs ranging to estimate the location of the second aerial vehicle, using the first and second UWB signals. The first aerial vehicle further dynamically controls its flight path for navigation and collision avoidance, based on the estimated location information, including relative position.

## Description

### TECHNICAL FIELD

The present invention is generally related to the field of aerial vehicles and particularly to a first aerial vehicle, a method, and a computer program product.

### BACKGROUND

Generally, the increasing deployment of drones across various industries, including agriculture, search and rescue, infrastructure monitoring, and surveillance, has highlighted the need for reliable localization and collision avoidance systems. Moreover, as drone operations become more widespread, particularly in complex environments with multiple independent operators, ensuring the safety and coordination of drones poses significant technical challenges.

Conventional devices and methods have several disadvantages which complicate drone localization and collision avoidance, as follows:
Collision avoidance in limited visibility: generally drones often operate in environments with poor visibility, such as foggy conditions, low-light scenarios, or dense urban settings. These conditions hinder the ability of conventional drones to navigate safely and avoid potential collisions with obstacles, other drones, manned aircraft, etc.

Absence of centralized collision confliction: many of conventional drone operations lack a centralized authority to manage flight paths, necessitating decentralized solutions. For instance, each drone must independently detect and avoid collisions, relying on effective inter-drone communication and robust cooperation protocols.

Disturbed Global Navigation Satellite Systems (GNSS) signals: the GNSS like Global Positioning System (GPS) are widely used for drone positioning. However, GNSS signals are susceptible to disturbances such as jamming, multipath effects, or signal loss in urban canyons. These disruptions can lead to inaccuracies in positional data, compromising safe navigation and collision avoidance.

Reliability of trajectory and position data: accurate trajectory and position data are essential for collision avoidance. This includes information about the drone's location, speed, heading, and intended flight path. In dynamic and unpredictable environments, maintaining reliable and up-to-date positional data is challenging.

Trustworthiness of position data: the integrity and authenticity of position data are crucial. Drones must verify that received positional data is accurate and not tampered with to avoid misleading information that could result in collisions or unsafe maneuvers.

Conventional methods for drone localization and collision avoidance, such as GNSS, vision-based systems, radar, and UWB-Time of Flight (UWB-ToF), exhibit significant limitations. GNSS-based systems can provide accurate positioning under ideal conditions but are prone to jamming and signal degradation in high-acceleration environments or areas with interference. Vision-based systems, which rely on cameras to detect obstacles and other drones, falter in poor visibility, low light, or obstructed environments, and require supplementary communication links. Similarly, radar-based systems, while capable of detecting obstacles, demand complex hardware and are sensitive to environmental conditions. UWB-ToF technology provides range measurements but depends on multiple fixed infrastructure anchors, limiting scalability and flexibility.

Other approaches include GNSS combined with ad-hoc networks, where drones exchange position and trajectory data using Wi-Fi or ZigBee, but these face challenges in RF-disturbed conditions or when GNSS signals are unavailable, particularly in smaller operational areas. GNSS integrated with a central fusion server suffers from uncertainties in GNSS measurements and the need for consistent software across drones. Advanced systems like ADS-B or TCAS from commercial aviation have been explored but are too slow and inaccurate for small-scale drone operations. Collectively, these limitations highlight the need for a more robust, scalable, and infrastructure-independent solution for drone localization and collision avoidance.

Therefore, it is generally desirable to improve the aerial vehicles and methods for direction finding and collision avoidance with drones.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the devices and combinations particularly pointed out in the appended claims. These and other features of the described technologies will become more fully apparent from the following description and appended claims, or may be learned by the practice of the disclosed concepts as set forth herein.

The present invention addresses the challenges and limitations of conventional drones and localization methods by leveraging Ultra-Wideband Direction of Arrival (UWB-DoA) technology. The first aerial vehicle and method of the invention enhance drone localization by integrating direction vectors with range in-formation, enabling precise three-dimensional (3D) positioning without reliance on centralized infrastructure. By utilizing non-planar antenna arrays, the system achieves robust and real-time collision avoidance, even in GNSS-denied environments. Moreover, the integration of UWB-DoA estimation may allow the first aerial vehicle to establish direct communication and autonomously perform collision avoidance without the need for complex transmission protocols or external support. Additionally, the first aerial vehicle determines complete relative positions, offering superior performance in challenging environments where conventional technologies, such as GNSS or vision-based systems, may fail. This infrastructure-free, scalable, and flexible solution is adaptable to diverse operational scenarios, meeting the growing demands of modern drone applications.

A first aspect of the disclosure provides a first aerial vehicle, wherein the first aerial vehicle comprises: an antenna unit comprising a first antenna submodule and a second antenna submodule, wherein the first antenna submodule comprises at least three first antennas provided in a first planar structural configuration, and wherein each first antenna of the at least three first antennas is configured to send and/or receive an Ultra-Wideband, UWB, signal, wherein the second antenna submodule comprises at least three second antennas provided in a second planar structural configuration, and wherein each second antenna of the at least three second antennas is configured to send and/or receive a UWB signal, and wherein the first planar structural configuration is not parallel to the second planar structural configuration; wherein the first aerial vehicle is configured to: send a first UWB signal to a second aerial vehicle; establish, in response to receiving a second UWB signal sent by the second aerial vehicle, a connection link between the first aerial vehicle and the second aerial vehicle; perform a ranging operation with the second aerial vehicle, wherein the ranging operation comprises estimating location information of the second aerial vehicle relative to the first aerial vehicle based on the first UWB signal and the received second UWB signal; and control a flight path of the first aerial vehicle based on the estimated location information of the second aerial vehicle relative to the first aerial vehicle.

The first aerial vehicle may be a drone, such as an unmanned aerial vehicle (UAV) designed for operations in environments requiring high precision and reliability. The first aerial vehicle may be used in applications like delivery, surveillance, infrastructure monitoring, search and rescue missions, and other operations that demand efficient localization and collision avoidance. The first aerial vehicle of the first aspect may solve the problem of drone localization and collision avoidance by employing UWB-DoA estimation. This is achieved by equipping the first aerial vehicle with an antenna array comprising two submodules, each containing three antennas. By transmitting and receiving UWB signals, the first aerial vehicle can determine its relative position to other aerial vehicles, including distance and angular measurements, enabling precise and effective collision avoidance.

The first aerial vehicle may have a structural configuration that accommodates various drone types and sizes, making it adaptable to different use cases. Moreover, it may support a robust operation that may be sued in scenarios where precision and real-time navigation are critical.

The first aerial vehicle comprises an antenna unit that comprises a first antenna submodule and a second antenna submodule. The first antenna submodule comprises at least three first antennas arranged in a first planar structural configuration. Each of these first antennas is configured to send and/or receive Ultra-Wideband (UWB) signals.

The second antenna submodule comprises at least three second antennas arranged in a second planar structural configuration. Similar to the first submodule, each of these second antennas is capable of sending and/or receiving UWB signals. Moreover, the first planar structural and the second planar structural configurations are not parallel to each other, thereby creating a three-dimensional arrangement.

Advantageously, the non-parallel arrangement of the antenna unit of the first aerial vehicle may enable better coverage and signal reception in 3D space, critical for accurate localization and direction finding. Moreover, the integration of multiple antennas into submodules ensures a space-efficient layout suitable for aerial vehicles with size constraints. Yet a further advantage may be that the use of multiple submodules improves reliability, especially in environments with obstacles or challenging RF conditions.

The first aerial vehicle is configured to send a first UWB signal to a second aerial vehicle. Moreover, upon receiving a second UWB signal from the second aerial vehicle, the first aerial vehicle establishes a connection link with the second aerial vehicle.

Advantageously, the UWB signals may allow rapid connection establishment and data exchange, critical for real-time collision avoidance. Furthermore, the direct communication between aerial vehicles may eliminate the need for external systems or centralized infrastructure.

The first aerial vehicle performs a ranging operation with the second aerial vehicle. The ranging operation comprises estimating the location information of the second aerial vehicle relative to the first aerial vehicle based on the sent first UWB signal and the received second UWB signal.

Advantageously, the first aerial vehicle may use the UWB signals and the ranging operation, in order to achieve precise distance and angular measurements. This may further enables rapid updates to the location information for dynamic collision avoidance and navigation.

The first aerial vehicle is further configured to control its flight path based on the estimated location information of the second aerial vehicle relative to itself.

The first aerial vehicle of the first aspect may offers robust advantages, combining precise 3D coverage and localization with UWB technology, ensuring comprehensive accuracy even in challenging environments. Its infrastructure-free design eliminates reliance on external systems, making it particularly suitable for remote or GNSS-denied scenarios. The scalability of the configuration supports seamless integration into multi-drone operations, enabling collaborative tasks such as swarm navigation. Additionally, the real-time responsiveness of the first aerial vehicle may allow dynamic collision avoidance and immediate adjustments to environmental changes, ensuring operational safety. For example, by autonomously controlling the flight path to maintain safe separation from other aerial vehicles, the first aerial vehicle minimizes the need for operator intervention, enhancing overall efficiency and safety.

In an implementation form of the first aspect, the location information of the second aerial vehicle relative to the first aerial vehicle comprises a relative distance between the second aerial vehicle and the first aerial vehicle, and wherein the two-way ranging operation further comprises: estimating the relative distance between the first aerial vehicle and the second aerial vehicle based on estimating a time difference between sending the first UWB signal and receiving the second UWB signal.

Advantageously, this may enable the precise determination of relative distances between aerial vehicles, ensuring accurate spatial awareness and facilitating effective collision avoidance and coordinated navigation in real-time.

In a further implementation form of the first aspect, the location information of the second aerial vehicle relative to the first aerial vehicle further comprises a Direction of Arrival (DoA) of the second aerial vehicle relative to the first aerial vehicle, wherein the ranging operation is a two-way ranging operation, and wherein the two-way ranging operation comprises: estimating the DoA of the second aerial vehicle relative to the first aerial vehicle based on the received second UWB signal.

Advantageously, this may enable the accurate determination of the directional relationship between aerial vehicles, enhancing the system's ability to perform precise relative positioning, optimize flight path adjustments, and ensure robust collision avoidance in complex and dynamic environments.

In a further implementation form of the first aspect, each first antenna is further configured to receive the second UWB signal with a different phase than the other first antennas, and wherein each second antenna is further configured to receive the second UWB signal with a different phase than the other second antennas, and wherein estimating the DoA of the second aerial vehicle relative to the first aerial vehicle based on the received second UWB signal comprises: estimating a phase difference between two phases of the second UWB signal when being received by two different antennas of the at least three first antennas and/or the at least three second antennas, and a wavelength of the second UWB signal.

Advantageously, this may enable highly precise estimation of the DoA by leveraging phase differences between signals received by different antennas, allowing for fine-grained angular resolution and improved accuracy in relative positioning and navigation, even in environments with complex signal propagation or multipath effects.

In a further implementation form of the first aspect, the location information of the second aerial vehicle relative to the first aerial vehicle further comprises an azimuth angle between the first aerial vehicle and the second aerial vehicle, and an elevation angle between the first aerial vehicle and the second aerial vehicle.

Advantageously, this may enable the comprehensive determination of the relative spatial orientation between aerial vehicles, facilitating precise three-dimensional (3D) positioning and navigation. By obtaining both azimuth and elevation angles, the system enhances its capability to execute accurate flight path adjustments and robust collision avoidance in three-dimensional operational spaces.

In a further implementation form of the first aspect, the two way ranging operation further comprises: determining the azimuth angle based on a first angle and a second angle, wherein the first angle is an angle between the received second UWB signal and a plane parallel to the first planar structural configuration, at a receiving point of the second UWB signal; wherein the second angle is an angle between the received second UWB signal and a plane parallel to second planar structural configuration, at a receiving point of the second UWB signal.

Advantageously, this may enable the precise calculation of the azimuth angle by combining angular measurements from two non-parallel planar configurations, improving the reliability and accuracy of directional localization. This approach enhances the ability of the first aerial vehicle to operate effectively in three-dimensional spaces, ensuring robust collision avoidance and optimized navigation even in challenging environments.

In a further implementation form of the first aspect, the two-way ranging operation further comprises: sending the estimated first angle and the second angle to the second aerial vehicle; receiving a third angle and a fourth angle sent by the second aerial vehicle, wherein the third angle and the fourth angle are estimated based on the received first UWB signal and an antenna structural configuration of the second aerial vehicle; and determining the azimuth angle based further on the third angle and the fourth angle.

In a further implementation form of the first aspect, the two-way ranging operation further comprises: determining an elevation angle between the first aerial vehicle and the second aerial vehicle based on the first angle, the second angle, the third angle, and the fourth angle.

In a further implementation form of the first aspect, the two-way ranging operation further comprises: receiving from the second aerial vehicle, location information of the first aerial vehicle relative to the second aerial vehicle that is measured by the second aerial vehicle; and wherein the first aerial vehicle is further configured to: control the flight path of the first aerial vehicle based further on the received location information of the first aerial vehicle relative to the second aerial vehicle.

In a further implementation form of the first aspect, the first aerial vehicle is further configured to obtain a threshold distance value; and determine a critical distance value based on the location in-formation of the first aerial vehicle relative to the second aerial vehicle and the location information of the second aerial vehicle relative to the first aerial vehicle; and wherein that the first aerial vehicle controls a flight path of the first aerial vehicle comprises: limiting a degree of freedom of the flight path of the first aerial vehicle to avoid a collision with the second aerial vehicle when determining that the critical distance value is equal with or smaller than the threshold distance value.

In a further implementation form of the first aspect, the first planar structural configuration and/or the second planar structural configuration is an L-shape structural configuration.

In a further implementation form of the first aspect, that the first aerial vehicle establishes the connection link comprises: establishing a Master-Slave link between the first aerial vehicle and the second aerial vehicle, wherein the first aerial vehicle sending the first UWB signal being the Master device, and wherein the second aerial vehicle sending the second UWB signal being the Slave device.

In a further implementation form of the first aspect, an inclination angle between the fist planar structural configuration and the second planar structural configuration is between 45° degree and 135° degree, preferably is 90° degree.

A second aspect of the disclosure provides a method comprising: providing an antenna unit comprising a first antenna submodule and a second antenna submodule, wherein the first antenna submodule comprises at least three first antennas provided in a first planar structural configuration, and wherein each first antenna of the at least three first antennas is configured to send and/or receive an Ultra-Wideband, UWB, signal, wherein the second antenna submodule comprises at least three second antennas provided in a second planar structural configuration, and wherein each second antenna of the at least three second antennas is configured to send and/or receive a UWB signal, wherein the first planar structural configuration is not parallel to the second planar structural configuration; sending a first UWB signal to a second aerial vehicle; establishing, in response to receiving a second UWB signal sent by the second aerial vehicle, a connection link between the first aerial vehicle and the second aerial vehicle; performing a ranging operation with the second aerial vehicle, wherein the ranging operation comprises estimating location information of the second aerial vehicle relative to the first aerial vehicle based on the first UWB signal and the received second UWB signal; and controlling a flight path of the first aerial vehicle based on the estimated location information of the second aerial vehicle relative to the first aerial vehicle.

In an implementation form of the second aspect, the location information of the second aerial vehicle relative to the first aerial vehicle comprises a relative distance between the second aerial vehicle and the first aerial vehicle, and wherein the method further comprise estimating the relative distance between the first aerial vehicle and the second aerial vehicle based on estimating a time difference between sending the first UWB signal and receiving the second UWB signal.

In a further implementation form of the second aspect, the location information of the second aerial vehicle relative to the first aerial vehicle further comprises a DoA of the second aerial vehicle relative to the first aerial vehicle, and wherein the method further comprise estimating the DoA of the second aerial vehicle relative to the first aerial vehicle based on the received second UWB signal.

In a further implementation form of the second aspect, each first antenna is further configured to receive the second UWB signal with a different phase than the other first antennas, and wherein each second antenna is further configured to receive the second UWB signal with a different phase than the other second antennas, and wherein the method further comprise estimating a phase difference between two phases of the second UWB signal when being received by two different antennas of the at least three first antennas and/or the at least three second antennas, and a wavelength of the second UWB signal.

In a further implementation form of the second aspect, the location information of the second aerial vehicle relative to the first aerial vehicle further comprises an azimuth angle between the first aerial vehicle and the second aerial vehicle, and an elevation angle between the first aerial vehicle and the second aerial vehicle.

In a further implementation form of the second aspect, the method further comprise determining the azimuth angle based on a first angle and a second angle, wherein the first angle is an angle between the received second UWB signal and a plane parallel to the first planar structural configuration, at a receiving point of the second UWB signal; wherein the second angle is an angle between the received second UWB signal and a plane parallel to second planar structural configuration, at a receiving point of the second UWB signal.

In a further implementation form of the second aspect, the method further comprise the estimated first angle and the second angle to the second aerial vehicle; receiving a third angle and a fourth angle sent by the second aerial vehicle, wherein the third angle and the fourth angle are estimated based on the received first UWB signal and an antenna structural configuration of the second aerial vehicle; and determining the azimuth angle based further on the third angle and the fourth angle.

In a further implementation form of the second aspect, the method further comprise determining an elevation angle between the first aerial vehicle and the second aerial vehicle based on the first angle, the second angle, the third angle, and the fourth angle.

In a further implementation form of the second aspect, the method further comprise receiving from the second aerial vehicle, location information of the first aerial vehicle relative to the second aerial vehicle that is measured by the second aerial vehicle; and wherein the first aerial vehicle is further configured to: control the flight path of the first aerial vehicle based further on the received location information of the first aerial vehicle relative to the second aerial vehicle.

In a further implementation form of the second aspect, the method further comprises obtaining a threshold distance value; and determining a critical distance value based on the location in-formation of the first aerial vehicle relative to the second aerial vehicle and the location information of the second aerial vehicle relative to the first aerial vehicle; and wherein controlling a flight path of the first aerial vehicle comprises limiting a degree of freedom of the flight path of the first aerial vehicle to avoid a collision with the second aerial vehicle when determining that the critical distance value is equal with or smaller than the threshold distance value.

In a further implementation form of the second aspect, the first planar structural configuration and/or the second planar structural configuration is an L-shape structural configuration.

In a further implementation form of the second aspect, the method further comprise establishing a Master-Slave link between the first aerial vehicle and the second aerial vehicle, wherein the first aerial vehicle sending the first UWB signal being the Master device, and wherein the second aerial vehicle sending the second UWB signal being the Slave device.

In a further implementation form of the second aspect, an inclination angle between the fist planar structural configuration and the second planar structural configuration is between 45° degree and 135° degree, preferably is 90° degree.

An third aspect of the disclosure provides computer program product comprising instructions which, when the program is executed by a computer, cause the computer to carry out one or more steps of the method of the second aspect or any of its implementation forms.

A fourth aspect of the disclosure provides a non-transitory storage medium storing executable program code which, when executed by a processor, cause the computer to carry out one or more steps of the method of the second aspect or any of its implementation forms.

It has to be noted that all devices, elements, units and means described in the disclosure could be implemented in the software or hardware elements or any kind of combination thereof. All steps which are performed by the various entities described in the disclosure as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates an example of a configuration of the first aerial vehicle, according to an embodiment of the invention;
FIG. 2 illustrates an example of a configuration of the antenna unit of the first aerial vehicle;
FIG. 3 illustrates an example flow diagram of a method for collaborative localization and flight control, according to an embodiment of the invention;
FIG. 4 illustrates a schematic diagram for determining a collaborative front-back ambiguity resolution; and
FIG. 5 illustrates an example flow diagram of a method, according to an embodiment of the invention.

### DETAILED DESCRIPTION OF EMBODIMENTS

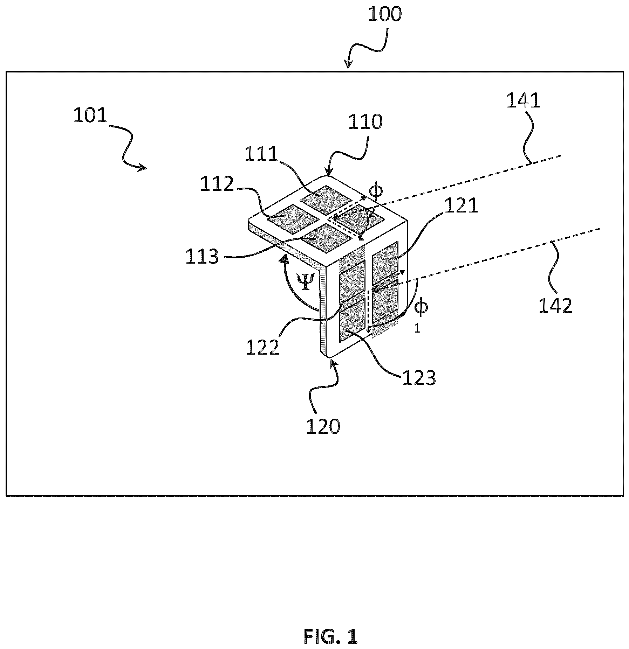

FIG. 1 illustrates an example

FIG. 1 illustrates an example of a configuration of the first aerial vehicle 100, according to an embodiment of the invention.

The first aerial vehicle 100 comprises an antenna unit 101 comprising a first antenna submodule 110 and a second antenna submodule 120. The first antenna submodule 110 comprises at least three first antennas 111, 112, 113 provided in a first planar structural configuration. Each first antenna of the at least three first antennas 111, 112, 113 is configured to send and/or receive UWB signal, wherein the second antenna submodule 120 comprises at least three second antennas 121, 122, 123 provided in a second planar structural configuration, and each second antenna of the at least three second antennas 121, 122, 123 is configured to send and/or receive a UWB signal 141, 142. Moreover, the first planar structural configuration is not parallel to the second planar structural configuration.

The first aerial vehicle 100 is configured to send a first UWB signal to a second aerial vehicle; establish, in response to receiving a second UWB signal 141, 142 sent by the second aerial vehicle, a connection link between the first aerial vehicle 100 and the second aerial vehicle; perform a ranging operation with the second aerial vehicle, wherein the ranging operation comprises estimating location information of the second aerial vehicle relative to the first aerial vehicle 100 based on the first UWB signal and the received second UWB signal 141, 142; and control a flight path of the first aerial vehicle 100 based on the estimated location information of the second aerial vehicle relative to the first aerial vehicle 100.

The first aerial vehicle 100 comprises multiple planar sub-arrays, each equipped with at least three elements. Each sub-array thereby is capable of measuring an azimuth angle ϕ, as well as an elevation angle θ. In the embodiment of FIG. 1, two sub-arrays is depicted, where Ψ is the angle between the two sub-arrays.

The first aerial vehicle 100 may achieve precise and reliable relative localization and collision avoidance through its antenna unit 110, which comprises two non-parallel planar submodules, each with at least three antennas capable of sending and receiving UWB signals. This non-parallel configuration allows for comprehensive 3D spatial coverage, enabling the aerial vehicle to estimate both range and direction relative to a second aerial vehicle using two-way ranging operations. By exchanging UWB signals, the first aerial vehicle establishes a connection link and calculates location information, including distance and direction, ensuring robust localization even in challenging environments.

The integration of UWB-DoA estimation further enhances the system by enabling precise positioning and differentiation between the lower and upper half spheres. By extending the planar array into the third dimension, the antenna array effectively resolves ambiguities between hemispheres. Additionally, the first aerial vehicle performs DS-TWR with the second aerial vehicle to obtain accurate range and angular measurements. This approach solves the geometric challenge of intersecting a line with a sphere to achieve complete relative positioning. As a result, the first aerial vehicle provides effective collision avoidance and localization without relying on infrastructure, complex transmission protocols, or visibility conditions, ensuring robust and scalable operation.

The first aerial vehicle 100 may enable dynamic flight path control and autonomous collision avoidance without reliance on external infrastructure.

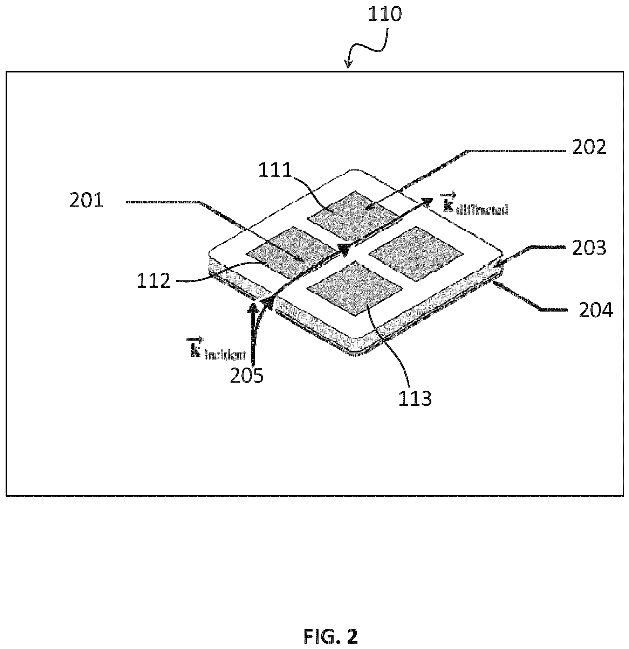

FIG. 2 illustrates an example of a schematic configuration of the antenna unit 110 of the first aerial vehicle 100.

The antenna unit 110 of the first aerial vehicle 100, as illustrated in FIG. 2, comprises patch antenna elements 202 arranged as the first antenna elements 111, 112, 113 and integrated with printed circuit board (PCB) insulating substrates 203 and a ground plane 204. The antenna unit 110 is designed as a nonplanar array. In the embodiment depicted in FIG. 2, the antenna unit 110 comprises an array including four antennas that are arranged in a rectangular configuration.

Moreover, in some embodiments, two submodules may be provided in which each submodule comprises three antennas configured in an L-shaped configuration. For example, at least three antennas may be provided in an L-shaped configuration, without limiting the present invention to a specific configuration. This arrangement enables the measurement of directional vectors in three-dimensional space, enhancing localization capabilities by providing azimuth angles (ϕ) and elevation angles (θ). Specifically, the subarray configuration and the direction of the diffracted wave 201 are illustrated. The diagram also depicts the incident signal 205, which interacts with the antenna element 110 and undergoes diffraction at its edges.

The hardware concept further includes components such as a microcontroller and analog front-ends for UWB processing, enabling the transmission and reception of Ultra-Wideband signals. The design incorporates backside detection capabilities, where signal diffraction around the edges of the PCB informs whether the Angle of Arrival (AoA) is within or outside the Field of View (FoV). This detection, based on the Channel Impulse Response (CIR) and signal strength analysis, ensures robust angular estimation quality. The angle Ψ between the two sub-arrays is optimized to improve localization precision and facilitate effective collaborative positioning in three-dimensional operational spaces.

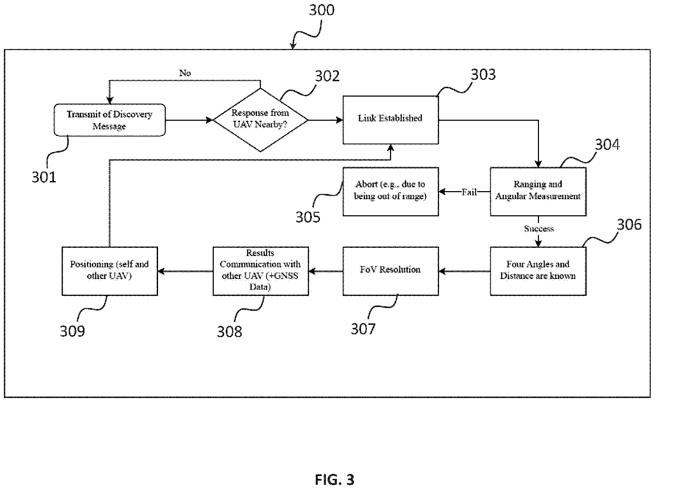

FIG. 3 illustrates an example flow diagram of a method 300 for collaborative localization and flight control, according to an embodiment of the invention.

The method 300 for collaborative localization and flight control is performed by the first aerial vehicle 100 and comprises the following steps.

At step 301, the first aerial vehicle 100 initiates the process by transmitting periodic discovery messages using its UWB (Ultra-Wideband) front-end. These discovery messages are sent at fixed timing intervals. The first aerial vehicle 100 alternates between transmitting and receiving states, following a predefined cycle time (Tc). This ensures that both the first aerial vehicle 100 and nearby aerial vehicles can detect each other when within proximity.

At step 302, the first aerial vehicle 100 detects the discovery message. For example, if a second aerial vehicle is within range and in a receiving state, it detects the discovery message from the first aerial vehicle 100. Upon reception, the second aerial vehicle acknowledges the message by sending a response signal, initiating the communication process.

At step 303, the first aerial vehicle 100 establishes a communication link. For example, upon acknowledgment from the second aerial vehicle, a communication link is established between the two aerial vehicles. A master-slave relationship is formed, with the original message-sending aerial vehicle designated as the master and the responding aerial vehicle as the slave. This designation facilitates efficient communication and measurement processes.

At step 304, the first aerial vehicle 100 performs ranging and angular measurement. For example, the first aerial vehicle 100 performs Double-Sided Two-Way Ranging (DS-TWR) with the second aerial vehicle. During this process, the aerial vehicles exchange ego-GNSS (if available) and measurement data, including UWB signal timestamps. By analyzing the data, the aerial vehicles estimate the relative distance and four angular parameters, two azimuth angles (ϕ1 and ϕ2) and two elevation angles (θ1 and θ2). Each planar submodule of the antenna unit contributes two possible position hypotheses for the second aerial vehicle, as it cannot distinguish between up and down. Moreover, by incorporating out-of-plane data from the second antenna submodule, contradictory hypotheses may be eliminated, and the corrected relative position is determined.

Moreover, if the ranging or angular measurement cannot be completed (e.g., due to the second aerial vehicle being out of range), the link is deemed obsolete, and the process is terminated at step 305. Alternatively, if the measurement is successful, the method proceeds to the next step 306.

At step 306, the first aerial vehicle 100 validates the measurements. For example, the first aerial vehicle 100 may determine that the four angles and distance to the second aerial vehicle are successfully known. This process is repeated periodically, ideally at a rate of 10 Hz, to ensure real-time updates and reliable collision avoidance.

At step 307, the first aerial vehicle 100 performs the Field-of-View (FoV) Resolution determination. For example, the FoV resolution may be determined to identify whether the second aerial vehicle is within or outside the detectable range. Signals received outside the FoV may be detected through edge diffraction of UWB signals, enabling the identification of potential out-of-FoV obstacles or aerial vehicles.

At step 308, the first aerial vehicle 100 communicates the results with the second aerial vehicle. For example, the first aerial vehicle 100 communicates the results, including the range and angular data, back to the second aerial vehicle. If available, the aerial vehicle also shares its GNSS position to facilitate global positioning and enhance the collaborative localization process.

At step 309, the first aerial vehicle 100 controls the flight path. For example, by the using the comprehensive relative positioning data, the first aerial vehicle dynamically adjusts its flight path to avoid collisions and maintain a safe operational distance. It can also perform further positioning operations, either by sharing its positional data with the second aerial vehicle or by using the data to enhance its own navigation and control systems.

This method 300 may ensure precise localization and collision avoidance through collaborative positioning, robust UWB signal processing, and efficient communication protocols.

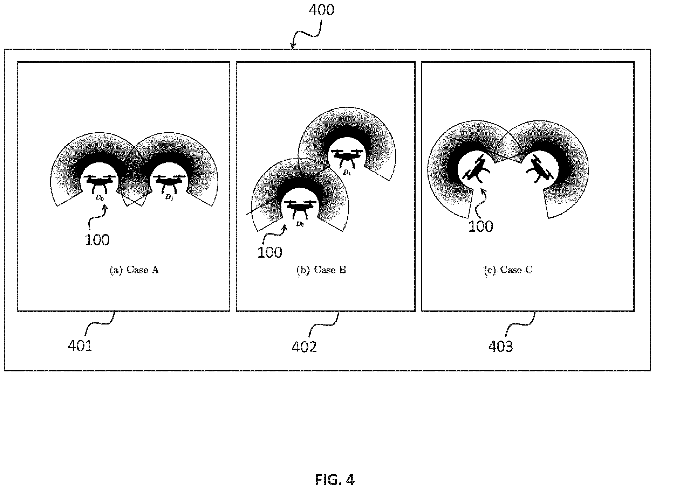

FIG. 4 illustrates a schematic diagram for determining a collaborative front-back ambiguity resolution; and

Specifically, three cases are illustrated in diagram 400 for collaborative front-backside ambiguity resolution including case A as it is illustrated in FIG. 4 with the reference number 401 in which Both devices are within each other's FoV, case B as it is illustrated in FIG. 4 with the reference number 402 in which one device is out-of-FoV, and case C as it is illustrated in FIG. 4 with the reference number 403 in which both devices are out-of-FoV.

As discussed above with respect to the step 307 of FIG. 3, the first aerial vehicle 100 performs the FoV Resolution determination. Moreover, the FoV resolution may be determined to identify whether the second aerial vehicle is within or outside the detectable range.

For example, the collaborative FoV Resolution Front-back ambiguity indicates the phenomenon where, with a planar array, it is unclear if the signal has arrived from the front side or the backside of the array. This issue has been addressed by introducing an additional array, yielding a combined nonplanar array. Furthermore, it may be determined that the FoV for each subarray is not 180° but rather much less, and the combined array does not exhibit a full 360° FoV as depicted in FIG. 4. In case of measurements outside the FoV, the estimated angle may, for example, "sticks" on either side of the available angle space, by which an out-of-FoV situation may be detected.

Furthermore, due to the operational environment, three distinctions may be made as follows:
Case A as it is illustrated in FIG. 4 with the reference number 401: in this case both aerial vehicles, i.e., the first aerial vehicle 100 and the second aerial vehicle are within the FoV of each other. Both directional estimates may be used in standalone or be fused to attain a better estimate.
Case B as it is illustrated in FIG. 4 with the reference number 402: in this case one of the aerial vehicles indicated as *D*₁, is out-of-FoV of the other aerial vehicle indicated as D0. This may be detected on the aerial vehicle D1 by the sticking angle estimation and by the aerial vehicle *D*₀ through geometrical projection (with the known attitude of the other device). In this case, the aerial vehicle *D*₀ may communicate the estimated, relative position to the aerial vehicle D1.
Case C as it is illustrated in FIG. 4 with the reference number 403: in this case both of the aerial vehicles are out-of-FoV for each other. Moreover, both angle measurements are sticking, which may be detected. Still, range measurement may be available with elevated variance and may further be used to perform collision avoidance. This case might rarely occur due to the operational environment and, for example, mainly when the aerial vehicles are moving away from each other (assuming dorsal mounting), which in turn is irrelevant for the collision avoidance functionality.

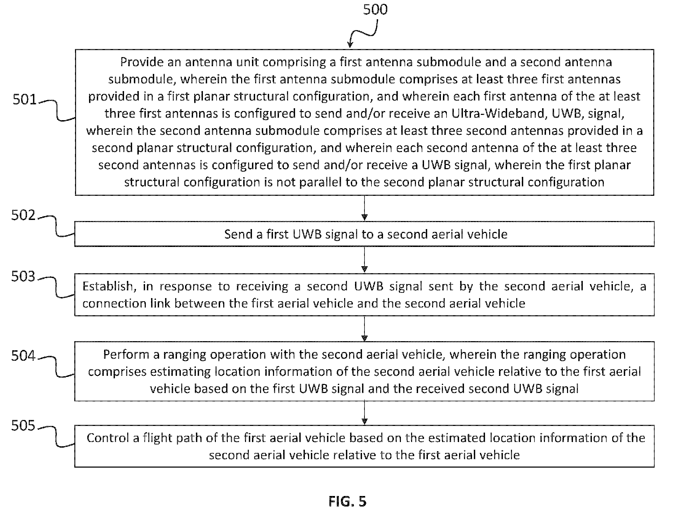

FIG. 5 illustrates an example flow diagram of a method 500, according to an embodiment of the invention.

The method 500 may be performed by the first aerial vehicle 100, as described above.

The method 500 comprises providing 501 an antenna unit 101 comprising a first antenna submodule 110 and a second antenna submodule 120, wherein the first antenna submodule 110 comprises at least three first antennas 111, 112, 113 provided in a first planar structural configuration, and wherein each first antenna of the at least three first antennas 111, 112, 113 is configured to send and/or receive a UWB signal, wherein the second antenna submodule 120 comprises at least three second antennas 121, 122, 123 provided in a second planar structural configuration, and wherein each second antenna of the at least three second antennas 121, 122, 123 is configured to send and/or receive a UWB signal, wherein the first planar structural configuration is not parallel to the second planar structural configuration.

The method 500 further comprises sending 502 a first UWB signal to a second aerial vehicle.

The method 500 further comprises establishing 503, in response to receiving a second UWB signal 141, 142 sent by the second aerial vehicle, a connection link between the first aerial vehicle 100 and the second aerial vehicle.

The method 500 further comprises performing 504 a ranging operation with the second aerial vehicle, wherein the ranging operation comprises estimating location information of the second aerial vehicle relative to the first aerial vehicle 100 based on the first UWB signal and the received second UWB signal 141, 142.

The method 500 further comprises controlling 505 a flight path of the first aerial vehicle 100 based on the estimated location information of the second aerial vehicle relative to the first aerial vehicle.

The first aerial vehicle 100, as described with respect to FIG. 1, and/or the method 500, as described with respect to FIG. 5, provide several advantages. One benefit is that it is independence from infrastructure, for example, unlike systems relying on centralized support or complex transmission protocols, the solution of the present invention enables drones to autonomously perform collision avoidance through direct communication. This independence ensures scalability and flexibility, as each drone is equipped with its own UWB antenna array, allowing the solution to be easily deployed across multiple drones and adapted to various configurations and mission requirements without requiring additional infrastructure. Furthermore, the solution of the present invention facilitates real-time and dynamic collision avoidance by enabling drones to exchange data and periodically update their relative positions, ensuring continuous adjustments to flight paths even in rapidly changing environments. Moreover, robustness in challenging environments is another notable advantage, as UWB-DoA estimation remains effective under conditions where GNSS or vision-based systems may fail, such as poor visibility, low light, or disturbed RF environments. This robustness makes the solution suitable for diverse scenarios. Additionally, the first aerial vehicle 100 supports complete relative positioning, allowing the drones to estimate not only distance but also angular measurements, providing comprehensive information for precise control and effective collision avoidance. Together, these features make the solution a highly scalable, reliable, and versatile option for drone operations in dynamic and challenging settings.

Moreover, the first aerial vehicle 100, as described with respect to FIG. 1, and/or the method 500, as described with respect to FIG. 5, can be utilized in various scenarios without limiting the invention to specific applications, environments, or contexts. In drone delivery, the collision avoidance systems ensure safe and efficient transportation of packages in urban or crowded areas. For aerial surveillance, the drones with collision avoidance capabilities can navigate complex environments, avoiding obstacles while capturing images or video for monitoring purposes. In search and rescue operations in which the drones can help locate individuals in remote or hazardous areas, avoiding collisions with obstacles or other drones. In precision agriculture in which the collision avoidance enables drones to navigate fields, avoiding obstacles like trees or power lines, while collecting data for crop monitoring, irrigation management, or pest detection. Moreover, in the infrastructure inspection may benefits from drones equipped with collision avoidance systems, as they can navigate complex structures such as bridges, towers, or pipelines, avoiding collisions while performing inspections or capturing high-resolution images. In the battlefield reconnaissance the drones provide real-time situational awareness to military personnel, maintaining safety and covertness. For force protection, collision avoidance ensures drones can detect and avoid potential threats or obstacles, reducing the risk of accidents. In target tracking, drones equipped with collision avoidance capabilities assist in monitoring targets, providing valuable intelligence while maintaining safe distances.

Additionally, the described technology offers notable advantages in interference robustness and infrastructure-free deployment. UWB technology provides robustness against interference from other wireless systems, ensuring reliable communication and accurate positioning even in high-interference environments. The solution's independence from centralized infrastructure allows deployment by multiple non-cooperating actors simultaneously, such as emergency services (e.g., police and firefighters) or inspection companies working under tight schedules. This flexibility enables collision avoidance and positioning without requiring shared infrastructure or coordination. Each actor operates its system independently, making decisions based on received data, allowing efficient and simultaneous operations. These features make UWB-DoA estimation a scalable and adaptable solution, suitable for diverse organizations and scenarios where independent or parallel operations are essential, free from the constraints of centralized coordination or infrastructure dependencies.

The various embodiments described above are provided by way of illustration only and should not be construed to limit the invention. For example, those skilled in the art will readily recognize various modifications and changes that may be made to the present invention without following the example embodiments and applications illustrated and described herein, and without departing from the scope of the present disclosure.

## Claims

1. A first aerial vehicle (100), wherein the first aerial vehicle (100) comprises:
an antenna unit (101) comprising a first antenna submodule (110) and a second antenna submodule (120),
wherein the first antenna submodule (110) comprises at least three first antennas (111, 112, 113) provided in a first planar structural configuration, and
wherein each first antenna of the at least three first antennas (111, 112, 113) is configured to send and/or receive an Ultra-Wideband, UWB, signal, wherein the second antenna submodule (120) comprises at least three second antennas (121, 122, 123) provided in a second planar structural configuration, and wherein each second antenna of the at least three second antennas (121, 122, 123) is configured to send and/or receive a UWB signal (141, 142), and wherein the first planar structural configuration is not parallel to the second planar structural configuration;
wherein the first aerial vehicle (100) is configured to:
send a first UWB signal to a second aerial vehicle;
establish, in response to receiving a second UWB signal (141, 142) sent by the second aerial vehicle, a connection link between the first aerial vehicle (100) and the second aerial vehicle;
perform a ranging operation with the second aerial vehicle, wherein the ranging operation comprises estimating location information of the second aerial vehicle relative to the first aerial vehicle (100) based on the first UWB signal and the received second UWB signal (141, 142); and
control a flight path of the first aerial vehicle (100) based on the estimated location information of the second aerial vehicle relative to the first aerial vehicle (100).

2. The first aerial vehicle (100) of claim 1, wherein the location information of the second aerial vehicle relative to the first aerial vehicle (100) comprises a relative distance between the second aerial vehicle and the first aerial vehicle (100), wherein the ranging operation is a two-way ranging operation, and wherein the two-way ranging operation comprises:
estimating the relative distance between the first aerial vehicle (100) and the second aerial vehicle based on estimating a time difference between sending the first UWB signal and receiving the second UWB signal (141).

3. The first aerial vehicle (100) of claim 2, wherein the location information of the second aerial vehicle relative to the first aerial vehicle (100) further comprises a Direction of Arrival, DoA, of the second aerial vehicle relative to the first aerial vehicle (100), and wherein the two-way ranging operation further comprises:
estimating the DoA of the second aerial vehicle relative to the first aerial vehicle (100) based on the received second UWB signal (141, 142).

4. The first aerial vehicle (100) of claim 3, wherein each first antenna is further configured to receive the second UWB signal (141, 142) with a different phase than the other first antennas, and wherein each second antenna is further configured to receive the second UWB signal (141, 142) with a different phase than the other second antennas, and wherein estimating the DoA of the second aerial vehicle relative to the first aerial vehicle based on the received second UWB signal (141, 142) comprises:
estimating a phase difference between two phases of the second UWB signal when being received by two different antennas of the at least three first antennas and/or the at least three second antennas, and a wavelength of the second UWB signal (141, 142).

5. The first aerial vehicle (100) according to any of claims 1 to 4, wherein the location information of the second aerial vehicle relative to the first aerial vehicle (100) further comprises an azimuth angle between the first aerial vehicle (100) and the second aerial vehicle, and an elevation angle between the first aerial vehicle (100) and the second aerial vehicle.

6. The first aerial vehicle (100) of claim 5, wherein the two-way ranging operation further comprises:
determining the azimuth angle based on a first angle and a second angle,
wherein the first angle is an angle between the received second UWB signal (141, 142) and a plane parallel to the first planar structural configuration, at a receiving point of the second UWB signal (141, 142);
wherein the second angle is an angle between the received second UWB signal (141, 142) and a plane parallel to second planar structural configuration, at a receiving point of the second UWB signal (141, 142).

7. The first aerial vehicle (100) according to claim 6, wherein the two-way ranging operation further comprises:
sending the estimated first angle and the second angle to the second aerial vehicle;
receiving a third angle and a fourth angle sent by the second aerial vehicle, wherein the third angle and the fourth angle are estimated based on the received first UWB signal and an antenna structural configuration of the second aerial vehicle; and
determining the azimuth angle based further on the third angle and the fourth angle.

8. The first aerial vehicle (100) of claim 7, wherein the two-way ranging operation further comprises:
determining an elevation angle between the first aerial vehicle (100) and the second aerial vehicle based on the first angle, the second angle, the third angle, and the fourth angle.

9. The first aerial vehicle (100) according to any of claims 1 to 8, wherein the two-way ranging operation further comprises:
receiving from the second aerial vehicle, location information of the first aerial vehicle relative (100) to the second aerial vehicle that is measured by the second aerial vehicle; and wherein the first aerial vehicle (100) is further configured to:
control the flight path of the first aerial vehicle (100) based further on the received location information of the first aerial vehicle (100) relative to the second aerial vehicle.

10. The first aerial vehicle (100) of claim 9, is further configured to:
obtain a threshold distance value; and
determine a critical distance value based on the location information of the first aerial vehicle (100) relative to the second aerial vehicle and the location information of the second aerial vehicle relative to the first aerial vehicle (100); and wherein that the first aerial vehicle (100) controls a flight path of the first aerial vehicle (100) comprises:
limiting a degree of freedom of the flight path of the first aerial vehicle (100) to avoid a collision with the second aerial vehicle when determining that the critical distance value is equal with or smaller than the threshold distance value.

11. The first aerial vehicle (100) according to any of claims 1 to 10, wherein:
the first planar structural configuration and/or the second planar structural configuration is an L-shape structural configuration.

12. The first aerial vehicle (100) according to any of claims 1 to 11, wherein that the first aerial vehicle (100) establishes the connection link comprises:
establishing a Master-Slave link between the first aerial vehicle (100) and the second aerial vehicle, wherein the first aerial vehicle (100) sending the first UWB signal being the Master device, and wherein the second aerial vehicle sending the second UWB signal being the Slave device.

13. The first aerial vehicle (100) according to any of claims 1 to 12, wherein an inclination angle between the fist planar structural configuration and the second planar structural configuration is between 45° degree and 135° degree, preferably is 90° degree.

14. A method (500) comprising:
providing (501) an antenna unit (101) comprising a first antenna submodule (110) and a second antenna submodule (120), wherein the first antenna submodule (110) comprises at least three first antennas (111, 112, 113) provided in a first planar structural configuration, and wherein each first antenna of the at least three first antennas (111, 112, 113) is configured to send and/or receive an Ultra-Wideband, UWB, signal, wherein the second antenna submodule (120) comprises at least three second antennas (121, 122, 123) provided in a second planar structural configuration, and wherein each second antenna of the at least three second antennas (121, 122, 123) is configured to send and/or receive a UWB signal, wherein the first planar structural configuration is not parallel to the second planar structural configuration;
sending (502) a first UWB signal to a second aerial vehicle;
establishing (503), in response to receiving a second UWB signal (141, 142) sent by the second aerial vehicle, a connection link between the first aerial vehicle (100) and the second aerial vehicle;
performing (504) a ranging operation with the second aerial vehicle, wherein the ranging operation comprises estimating location information of the second aerial vehicle relative to the first aerial vehicle (100) based on the first UWB signal and the received second UWB signal (141, 142); and
controlling (505) a flight path of the first aerial vehicle (100) based on the estimated location information of the second aerial vehicle relative to the first aerial vehicle.

15. A computer program product comprising instructions which, when the program is executed by a computer, cause the computer to carry out one or more steps of the method (500) of 14.
